(19) Europäisches Patentamt
European Patent Office
Office européen des brevets

(11) Veröffentlichungsnummer: **0 423 577 A1**

# (12) EUROPÄISCHE PATENTANMELDUNG

(21) Anmeldenummer: **90119227.8**

(51) Int. Cl.5: **C08G 69/34**, C08L 101/00

(22) Anmeldetag: **06.10.90**

(30) Priorität: **19.10.89 DE 3934825**

(43) Veröffentlichungstag der Anmeldung:
**24.04.91 Patentblatt 91/17**

(84) Benannte Vertragsstaaten:
**DE FR GB IT**

(71) Anmelder: **BAYER AG**

**W-5090 Leverkusen 1 Bayerwerk(DE)**

(72) Erfinder: **Heinz, Hans-Detlef, Dr.**
**Breslauerstrasse 31**
**W-4150 Krefeld 11(DE)**
Erfinder: **Horn, Klaus, Dr.**
**Bodelschwinghstrasse 12**
**W-4150 Krefeld(DE)**

## (54) Polyamidelastomere, ihre Herstellung und ihre Verwendung.

(57) Die Erfindung betrifft amorphe Polyamide mit Elastomercharakter auf Basis von Dimerfettsäuren und speziellen prim./sek.-Diaminen und/oder speziellen disekundären Diaminen mit einer Glastemperatur von weniger als + 10 °C, die Herstellung dieser amorphen Polyamide und ihre Verwendung als Kautschuk, Weichmacher bzw. Schlagzähmodifikatoren für Thermoplaste, als Weichsegmente zum Aufbau thermoplastischer Elastomerer und für andere Zwecke.

EP 0 423 577 A1

## POLYAMIDELASTOMERE, IHRE HERSTELLUNG UND IHRE VERWENDUNG

Die Erfindung betrifft amorphe Polyamide mit Elastomercharakter auf Basis von Dimerfettsäuren und speziellen prim./sek.-Diaminen und/oder speziellen disekundären Diaminen mit einer Glastemperatur von weniger als + 10° C, ihre Herstellung sowie ihre Verwendung als Kautschuk, Weichmacher bzw. Schlagzähmodifikatoren für Thermoplaste sowie als Weichsegmente zum Aufbau thermoplastischer Elastomerer und für andere Zwecke.

Weichsegmente zum Aufbau von thermoplastischen Elastomeren sind bekannt, z.B. Polyether und aliphatische Polyester. Polyether weisen z.B. häufig nur eine schlechte Witterungsbeständigkeit auf, während Polyester hydrolyseanfällig sind. Weiterhin bringt die Tatsache, daß beide i.a. mit Hydroxylgruppen terminiert sind, häufig eine nur geringe Reaktivität der Endgruppen oder - z.B. bei Polyurethanen - eine relativ niedrige thermische Stabilität der Verknüpfungsgruppe mit sich.

Es wäre daher wünschenswert, Elastomere bzw. Weichsegmente auf Basis von Polyamiden einsetzen zu können, da die Amidgruppe von deutlich höherer Hydrolysestabilität ist als die Estergruppe und weil die Synthese von Polyamiden bezüglich der Endgruppen ($-NH_2$, -COOH u.a.) viele Freiheitsgrade läßt.

Es ist bekannt, daß durch N-Alkylierung die Schmelzpunkte von Polyamiden drastisch herabgesetzt werden können. Ein Polyamid aus z.B. wesentlichen Teilen eines N,N′-Dialkylalkylendiamins weist gummiartiges Verhalten auf (s. z.B. Vieweg/Müller, Kunststoff-Handbuch, Bd. VI, Polyamide, Carl-Hanser-Verlag, München 1966). Solche Diamine sind aber nur schwierig herzustellen und die Produkte daher ohne technische Relevanz geblieben.

Überraschend wurde nun gefunden, daß Polyamide auf Basis dimerer Fettsäuren und spezieller cyclischer bisekundärer Diamine und/oder spezieller prim./sek.-Diamine amorph sind und Glasübergangstemperaturen von weniger als + 10° C besitzen, wobei gut verfügbare Bausteine eingesetzt werden können. Sie haben den Charakter von Elastomeren.

Gegenstand der Erfindung sind daher amorphe Polyamide mit einer Glasübergangstemperatur Tg unterhalb von + 10° C, vorzugsweise unterhalb von 0° C, und elastomerem Verhalten, bestehend aus Einheiten, abgeleitet von

1) Dimerfettsäuren,

2) einem oder mehreren prim./sek.-Diaminen der allgemeinen Formel (I)

$H_2N-R^1-NH-R^2$ (I)

und/oder (II)

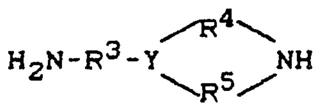

(II)

wobei

$R^1$ einen Alkylenrest mit 2 bis 36, bevorzugt 2 bis 10, C-Atomen,

$R^2$ einen Alkylrest mit 1 bis 20, bevorzugt 1 bis 5, C-Atomen,

$R^3$ einen $C_{1-15}$, bevorzugt $C_{2-6}$-Alkylenrest,

$R^4$, $R^5$ unabhängig voneinander einen $C_{2-10}$-, bevorzugt einen $C_{2-6}$-Alkylenrest und besonders bevorzugt einen $-C_2H_4$-Rest,

Y N oder -CH- oder $-C-R^6$ wobei $R^6$ ein Alkylrest mit 1 bis 5 C-Atomen ist,

bedeuten,

und/oder als sekundäres Diamin Piperazin und/oder ein alkylsubstituiertes Piperazin, vorzugsweise Piperazin,

sowie gegebenenfalls

3) 0 bis 60 Gew.-% (bezogen auf die Summe von 1) und 2)), vorzugsweise 10 bis 50 Gew.-%, weiterer bekannter polyamidbildender Bausteine, wobei Dicarbonsäuren gemäß 1) und gegebenenfalls 3) sowie Diamine gemäß 2) und gegebenenfalls 3) im Molverhältnis von 1 : 0,8 bis 0,8 : 1, bevorzugt 1 : 0,9 bis 0,9 : 1 eingesetzt werden, und wobei die erfindungsgemäß zu verwendenden Dimerfettsäuren gemäß 1) mindestens 80 Gew.-%, bevorzugt mindestens 90 Gew.-%, dimere Fettsäure enthalten.

Weiterer Erfindungsgegenstand ist ein Herstellungsverfahren dieser Polyamide aus den genannten Komponenten nach an sich üblichen Polykondensationsverfahren.

Es ist bekannt, daß Polyamide aus Piperazin und Dodecandicarbonsäure bzw. Korksäure Glasübergangstemperaturen von 90° C bzw. 79° C aufweisen und teilkristallin sind (A. Botta, J. of App. Polymer

Science 30 , 1669 - 1677 (1985)). Sie sind daher als Weichsegmente völlig ungeeignet.

Polyamide auf Basis dimerer Fettsäuren und anderer polyamidbildender Komponenten sind als Heißschmelz-Klebstoffe (z.B. EP 0 182 957) oder auch z.B. als Lacke oder Drucktintenrohstoffe (EP-0 327 354) beschrieben. Hierbei handelt es sich jedoch immer um teilkristalline Produkte, die im Sinne der vorliegenden Erfindung ungeeignet sind.

Der überraschende Befund war gewesen, daß im Gegensatz zu Polyamiden aus Dimerfettsäuren und z.B. Hexamethylendiaminen oder 4,4′-Diaminodicyclohexylmethan, die zwar eine Tg unterhalb von 10 °C aufweisen, aber teilkristallin und bei Raumtemperatur spröde sind, die erfindungsgemäßen Polyamide amorph und daher als Weichkomponenten sehr gut geeignet sind.

Dimerfettsäuren sind bekannte Stoffe und kommerziell erhältlich (z.B. von Unichema oder Henkel). Bevorzugt sind diejenigen Dimerfettsäuren, wie sie u.a. von der F. Unichema unter dem Handelsnamen Pripol® vertrieben werden.

Die Diamine der Formeln (I) und (II) sind prinzipiell bekannt oder können nach prinzipiell bekannten Verfahren hergestellt werden.

Spezifische Beispiele für Diamine der Formel (I) sind: 1-Amino-3-methylaminopropan, 1-Amino-3-ethylaminopropan, 1-Amino-3-propyl-aminopropan, 1-Amino-3-butylaminopropan, 1-Amino-3-cyclohexylaminopropan, 1-Amino-3-hexylaminopropan, 1-Amino-4-methylaminobutan, 1-Amino-4-ethylaminobutan, 1-Amino-4-butylaminobutan, 1-Amino-4-hexylaminobutan, 1-Amino-4-cyclohexylaminobutan, 1-Amino-5-methylaminopentan, 1-Amino-6-methylaminohexan, N-Methyl-dimerfettamin,

Spezifische Beispiele für Diamine der Formel (II) sind: 2-Aminoethylpiperazin, 2-Aminopropylpiperazin, 2-Aminobutylpiperazin und 2-Aminohexylpiperazin.

Beispiele für alkylsubstituierte Piperazine sind 2-Methylpiperazin, 2,5-Dimethylpiperazin und 2,5-Diethylpiperazin.

Bevorzugt sind u.a. Piperazin, 2-Aminoethylpiperazin, N-Cyclohexyl-1,3-diaminopropan und N-Methyl-1,3-diaminopropan.

Als gegebenenfalls zusätzlich zu 1) und 2) einzusetzende polyamidbildende Bausteine sind z.B. aliphatische Dicarbonsäuren mit 6 bis 12 C-Atomen bzw. aromatische Dicarbonsäuren mit 6 bis 14 C-Atomen, so z.B Adipinsäure, Trimethyladipinsäure, Azelainsäure, Sebazinsäure, Dodecandisäure, Isophthalsäure und Terephthalsäure, aliphatische Diamine mit 4 bis 16 C-Atomen wie z.B. 1,4-Diaminobutan, Hexamethylendiamin, Octamethylendiamin, Trimethylhexamethylendiamine, Decamethylendiamin, 4,4′-Diaminodicyclohexylmethan sowie Lactame mit 5 bis 13 Ringgliedern wie Caprolactam und Laurinlactam und/oder Aminocarbonsäuren wie Aminocapronsäure und Aminoundecansäure geeignet.

Bevorzugt werden Adipinsäure, Azelainsäure, Sebazinsäure, Isophthalsäure, Terephthalsäure, Hexamethylendiamin sowie Caprolactam eingesetzt.

Besonders bevorzugt sind Adipinsäure, Hexamethylendiamin und Caprolactam.

Die Komponenten 1) und 3) können teilweise auch Doppelbindungen enthalten.

Die Mitverwendung üblicher Kettenabbrecher, z.B. monofunktioneller Carbonsäuren oder Amine, z.B. Essigsäure, Hexansäure, Benzoesäure, Cyclohexancarbonsäure, Stearinsäure, Hexylamin bzw. Cyclohexylamin, ist in üblichen Mengen möglich.

Auch Anhydride wie z.B. Maleinsäureanhydrid oder Tetrahydrophthalsäureanhydrid sind als Kettenabbrecher geeignet.

Die Herstellung der erfindungsgemäßen Polyamide erfolgt nach den allgemein üblichen Verfahren, kontinuierlich oder diskontinuierlich.

Es können die für die Polyamidbildung üblichen Katalysatoren Verwendung finden.

In einer bevorzugten Ausführungsform der Erfindung werden neben den Dimerfettsäuren 1) und den Aminen 2) 10 bis 45 Gew.-% an Bausteinen 3) eingesetzt, besonders bevorzugt Hexamethylendiamin und Caprolactam.

Die erfindungsgemäßen PA-Elastomeren sind amorph. Im Rahmen dieser Erfindung wird darunter verstanden, daß die Schmelzwärme am Schmelzpunkt, bestimmt durch DSC mit z.B. einer Aufheizrate von 20 $K \cdot min^{-1}$ (2. Aufheizen), maximal 2 J/g, bevorzugt nicht unter mehr als 1 J/g und besonders bevorzugt nicht mehr als 0,5 J/g, insbesondere 0 J/g, betragen soll. Üblicherweise zeigen sie keinen bzw. praktisch keinen Schmelzpunkt bei der DSC-Messung.

Sie weisen weiterhin Glastemperaturen, bestimmt z.B. durch DSC, von weniger als 10 °C, bevorzugt weniger als 0 °C und insbesondere weniger als -5 °C, auf. Sie besitzen kautschukähnlichen Charakter, dadurch gekennzeichnet, daß sie nach Dehnung sich wieder zumindest teilweise zusammenziehen.

Die erfindungsgemäßen Polyamide können als Weichsegmente für Polykondensate wie z.B. Polyamide oder Polyester und/oder Polyadditionsprodukte wie z.B, Polyurethane, sowie als Schlagzähmodifikatoren bzw. Weichmacher verwendet werden. Weiterhin können die erfindungsgemäßen Polyamide als Elastomersegment und/oder als Härter für Duromere, z.B. auf Epoxidbasis, oder auch (gegebenenfalls nach Vernetzung) als Kautschuke Verwendung finden.

Die nachstehenden Beispiele mit typischen Einsatzstoffen in typischen Mengen dienen der Erläuterung der Erfindung, ohne sie in irgendeiner Weise einzuschränken. Die Glasübergangstemperaturen wurden mit einem Perkin-Elmer-DSC-System 7-Gerät gemessen.

Beispiel 1

46,1 g Dimerfettsäure (Pripol® 1010, ein Produkt der Fa. Unichema mit einer SZ von 194,5) und 10,3 g 2-Aminoethylpiperazin werden in einen 250 ml-Rundkolben eingewogen. Nach zweimaligem Evakuieren und Entspannen mit Stickstoff wird unter Rühren in 15 min aufgeheizt und 1 Stunde bei 180 °C gehalten. Dann wird jeweils 1 Stunde bei 200 °C, 220 °C und 240 °C gerührt.

Das so erhaltene Polyamid besitzt eine Glasübergangstemperatur Tg (DSC) von -11,2 °C und ist amorph (kein Schmelzpunkt erkennbar in dem DSC-Diagramm).

Beispiel 2

Wie in Beispiel 1 wurden umgesetzt:
46,1 g Dimerfettsäure (Pripol® 1010, SZ = 194,5) und 7,0 g 99%iges Piperazin.
Glasübergangstemperatur Tg = - 14,2 °C
Das Produkt ist laut DSC amorph.

Beispiel 3

Wie in Beispiel 1 wurden umgesetzt:
46,1 g Dimerfettsäure (Pripol® 1010, SZ = 194,5) und 12,5 g N-Cyclohexyl-1,3-diaminopropan.
Glasübergangstemperatur Tg = - 9,1 °C
Das Produkt ist laut DSC amorph.

Beispiel 4

Wie in Beispiel 1 wurden umgesetzt:
46,1 g Dimerfettsäure (Pripol® 1010, SZ = 194,5),
5,3 g 3-(Methylamino)-propylamin und 2,3 g Hexamethylendiamin.
Glasübergangstemperatur Tg = - 19,3 °C
Das Produkt ist laut DSC amorph.

Beispiel 5

Wie in Beispiel 1 wurden umgesetzt:
46,1 g Dimerfettsäure (Pripol® 1010, SZ = 194,5),
5,2 g 99%iges Piperazin und 2,3 g Hexamethylendiamin.
Glasübergangstemperatur Tg = - 13,2 °C
Das Produkt ist laut DSC amorph.

Beispiel 6

Wie in Beispiel 1 wurden umgesetzt:
46,1 g Dimerfettsäure (Pripol® 1010, SZ = 194,5),
3,12 g N-Cyclohexyl-1,3-propandiamin und 5,16 g Piperazin.
Glasübergangstemperatur Tg = - 13,1 °C
Das Produkt ist laut DSC amorph.

Beispiel 7

Wie in Beispiel 1 wurden umgesetzt:
46,1 g Dimerfettsäure (Pripol® 1010, SZ = 194,5),
3,12 g N-Cyclohexal-1,3-propandiamin,
1,72 g Piperazin und 6,24 g 2-(Aminoethyl)-piperazin.
Glasübergangstemperatur Tg = - 12,1 ° C
Das Produkt ist laut DSC amorph.

Beispiele 8+9

Jeweils 115,5 g Pripol® 1010 und 22,7 g Aminoethylpiperazin und 2,27 g Hexamethylendiamin (Beispiel 8) bzw. 18,8 g 2-Aminoethylpiperazin und 5,69 g Hexamethylendiamin (Beispiel 9) werden nach Beschleierung mit $N_2$ im 250 ml-Rundkolben je 1 Stunde auf 180, dann 200, dann 220, dann 240 und 260 ° C erhitzt. Die Glastemperaturen betragen - 10,9 (Beispiel 8) bzw. - 11,8 ° C (Beispiel 9). Die Produkte sind nach DSC amorph.

Vergleichsbeispiel

115,5 g Pripol 1010 und 23,24 g Hexamethylendiamin werden, wie für die Beispiele 8 und 9 beschrieben, jedoch nur bis 240 ° C erhitzt.
Die Glastemperatur beträgt -7,0 ° C, der Schmelzpunkt liegt bei 81,6 ° C, die Schmelzwärme betragt 20,1 J/g. Das Produkt ist im Gegensatz zu den Produkten der Beispiele 1 bis 10, welche Elastomercharakter aufweisen, spröde.

**Ansprüche**

1. Amorphe Polyamide mit einer Glasübergangstemperatur Tg unterhalb von + 10 ° C, und elastomerem Verhalten, bestehend aus Einheiten, abgeleitet von
1) Dimerfettsäuren, welche mindestens 80 Gew.-% dimere Fettsäure enthalten,
2) einem oder mehreren prim./sek.-Diaminen der allgemeinen Formel (I)
$H_2N-R^1-NH-R^2$ (I)
und/oder (II)

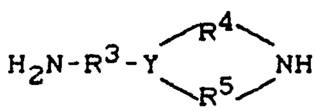
(II)

wobei
$R^1$ einen Alkylenrest mit 2 bis 36 C-Atomen,
$R^2$ einen Alkylrest mit 1 bis 20 C-Atomen,
$R^3$ einen $C_{1-15}$-Alkylenrest,
$R^4$, $R^5$ unabhängig voneinander einen $C_{2-10}$-, Alkylenrest,
Y N oder -CH- oder -C-$R^6$ wobei $R^6$ ein Alkylrest mit 1 bis 5 C-Atomen ist,
bedeuten,
und/oder als sekundärem Diamin Piperazin oder ein alkylsubstituiertes Piperazin
sowie gegebenenfalls
3) 0 bis ungefähr 60 Gew.-% (bezogen auf die Summe von 1) und 2)) weiterer bekannter polyamidbildender Bausteine,
wobei Dicarbonsäuren gemäß 1) und gegebenenfalls 3) sowie Diamine gemäß 2) und gegebenenfalls 3) im Molverhältnis von 1 : 0,8 bis 0,8 : 1, bevorzugt 1 : 0,9 bis 0,9 : 1, eingesetzt werden.
2. Amorphe Polyamide mit einer Glasübergangstemperatur Tg unterhalb von -5 ° C und elastomerem Verhalten, bestehend aus Einheiten, abgeleitet von
1) Dimerfettsäuren, welche mindestens 90 Gew.-% dimere Fettsäure enthalten,

2) einem oder mehreren prim./sek.-Diaminen der allgemeinen Formel (I ) $H_2N-R^1-NH-R^2$ (I)
und/oder (II)

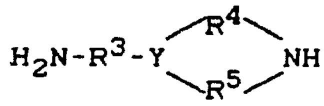 (II)

wobei
$R^1$ einen Alkylenrest mit 2 bis 10 C-Atomen,
$R^2$ einen Alkylrest mit 1 bis 5 C-Atomen,
$R^3$ einen $C_{2-6}$-Alkylenrest,
$R^4$, $R^5$ unabhängig voneinander einen $C_{1-6}$-Alkylenrest und besonders bevorzugt einen $-C_2H_4$-Rest,
Y N
bedeuten,
und/oder als sekundäres Diamin Piperazin
sowie
3) ≦ 50 Gew.-% (bezogen auf die Summe von 1) und 2)), weiterer bekannter polyamidbildender Bausteine, wobei Dicarbonsäuren gemäß 1) und gegebenenfalls 3) sowie Diamine gemäß 2) und gegebenenfalls 3) im Molverhältnis von 1 : 0,8 bis 0,8 : 1, bevorzugt 1 : 0,9 bis 0,9 : 1, eingesetzt werden.

3. Amorphe Polyamide nach Ansprüchen 1 und 2, dadurch gekennzeichnet, daß als Amine 2) bevorzugt u.a. Piperazin, N-(2-Aminoethyl)-piperazin, N-Cyclohexyl-1,3-diaminopropan und N-Methyl-1,3-diaminopropan verwendet werden.

4. Amorphe Polyamide nach Ansprüchen 1 bis 3, dadurch gekennzeichnet, daß als Komponenten 3) bevorzugt Adipinsäure, Azelainsäure, Sebazinsäure, Isophthalsäure, Terephthalsäure, Hexamethylendiamin sowie Caprolactam und besonders bevorzugt Adipinsäure, Hexamethylendiamin und Caprolactam eingesetzt werden.

5. Amorphe Polyamide nach Ansprüchen 1 bis 4, dadurch gekennzeichnet, daß als Komponente 1) und/oder 3) gegebenenfalls zumindest zum Teil, doppelbindungshaltige Verbindungen eingesetzt werden.

6. Amorphe Polyamide nach Ansprüchen 1 bis 5, mit Schmelzwärmen, bestimmt durch DSC mit z.B. einer Aufheizrate von 20 $K^{min-1}$ (2. Aufheizen), von maximal 2 J/g, bevorzugt nicht mehr als 1 J/g und besonders bevorzugt nicht mehr als 0,5 J/g, insbesondere 0 J/g, die Glastemperaturen, bestimmt z.B. durch DSC, von weniger als 10 °C, bevorzugt weniger als 0 °C und insbesondere weniger als - 5 °C, und die kautschukähnlichen Charakter, dadurch gekennzeichnet, daß sie nach Dehnung sich zumindest teilweise wieder zusammenziehen, aufweisen.

7. Verfahren zur Herstellung der amorphen Polyamide nach Ansprüchen 1-6, mit einer Glasübergangstemperatur Tg unterhalb von + 10 °C und elastomerem Verhalten,nach üblichen thermischen Polyamid-Kondensationsverfahren, dadurch gekennzeichnet, daß
1) Dimerfettsäuren, welche mindestens 80 Gew.-%, dimere Fettsäure enthalten,
2) mit einem oder mehreren prim./sek.-Diaminen der allgemeinen Formel (I)
$H_2N-R^1-NH-R^2$ (I)
und/oder (II)

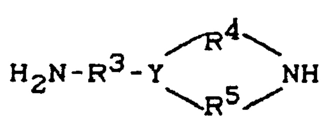 (II)

wobei
$R^1$ einen Alkylenrest mit 2 bis 36 C-Atomen,
$R^2$ einen Alkylrest mit 1 bis 20 C-Atomen,
$R^3$ einen $C_{1-15}$ Alkylenrest,
$R^4$, $R^5$ unabhängig voneinander einen $C_{2-10}$-Alkylenrest,
Y N oder -CH- oder $-C-R^6$ wobei $R^6$ ein Alkylrest mit 1 bis 5 C-Atomen ist,
bedeuten,
und/oder Piperazin und/oder alkylsubstituierten Piperazinen
sowie gegebenenfalls mit
3) 0 bis ungefähr 60 Gew.-% (bezogen auf 1) + 2)) weiterer bekannter polyamidbildender Bausteine,

wobei Dicarbonsäuren gemäß 1) und gegebenenfalls 3) sowie Diamine gemäß 2) und gegebenenfalls 3) im Molverhältnis von 1 : 0,8 bis 0,8 : 1, eingesetzt werden,
umgesetzt werden.

8. Verfahren zur Herstellung amorpher Polyamide nach Anspruch 7 mit einer Glasübergangstemperatur Tg unterhalb von -5° C, und elastomerem Verhalten nach üblichen thermischen Polyamid-Kondensationsverfahren, dadurch gekennzeichnet, daß

1) Dimerfettsäuren, welche mindestens 90 Gew.-%, dimere Fettsäure enthalten,

2) mit einem oder mehreren prim./sek.-Diaminen der allgemeinen Formel (I)

$H_2N-R^1-NH-R^2$ (I)

und/oder (II)

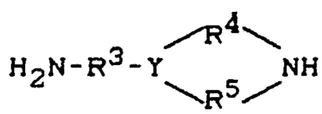

(II)

wobei
$R^1$ einen Alkylenrest mit 2 bis 10 C-Atomen,
$R^2$ einen Alkylrest mit 1 bis 5 C-Atomen,
$R^3$ einen $C_{2-6}$- Alkylenrest,
$R^4$, $R^5$ unabhängig voneinander einen $C_{2-6}$-Alkylenrest und besonders bevorzugt einen $-C_2H_4$-Rest,
Y N
bedeuten,
und/oder Piperazin
sowie mit

3) ≦ 50 Gew.-% weiterer bekannter polyamidbildender Bausteine,

wobei Dicarbonsäuren gemäß 1) und gegebenenfalls 3) sowie Diamine gemß 2) und gegebenenfalls 3) im Molverhältnis von 1 : 0,8 bis 0,8 : 1, bevorzugt 1 : 0,9 bis 0,9 : 1, eingesetzt werden,
umgesetzt werden

9. Verwendung der amorphen Polyamide nach Ansprüchen 1 bis 6 als Weichsegmente für Thermoplaste bzw. für thermoplastische Elastomere, als Schlagzähmodifikatoren für Thermoplaste und Duromere, als Weichmacher, als (gegebenenfalls nach Vernetzung) Kautschuk sowie als sonstiges Additiv für Thermoplaste und Duromere oder Fasern.

Europäisches Patentamt

# EUROPÄISCHER RECHERCHENBERICHT

Nummer der Anmeldung

**EP 90 11 9227**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 214 111 (LABOFINA S.A.)<br>* Ansprüche 1-3,5,6,10-15 *<br>– – – | 1-8 | C 08 G 69/34<br>C 08 L 101/00 |
| A | EP-A-0 252 860 (RHONE-POULENC CHIMIE)<br>* Ansprüche 1-8 *<br>– – – | 1-8 | |
| A | EP-A-0 334 667 (UNION CAMP CORPORATION)<br>* Ansprüche 1-9 *<br>– – – – – | 1-8 | |

RECHERCHIERTE SACHGEBIETE (Int. Cl.5)

C 08 G
C 08 L

Der vorliegende Recherchenbericht wurde für alle Patentansprüche erstellt

| Recherchenort | Abschlußdatum der Recherche | Prüfer |
|---|---|---|
| Den Haag | 16 Januar 91 | GLANDDIER A. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument